# EUROPEAN PATENT SPECIFICATION

(11) **EP 1 881 222 B1**
(45) Date of publication and mention of the grant of the patent: **14.12.2011**
(21) Application number: 06014825.1
(22) Date of filing: 17.07.2006
(51) Int. Cl.: F16D 48/02

(54) **Method of operating a dual clutch transmission hydraulic power control system as well as dual clutch transmission hydraulic power control system**
Verfahren zum Betrieb eines hydraulisches Steuerungssystems für ein Doppelkupplungsgetriebe und hydraulisches Steuerungssystem dafür
Procédé de commande d'un système hydraulique de commande pour transmission à double embrayage, et système hydraulique de commande pour transmission à double embrayage

(43) Date of publication of application: 23.01.2008
(73) Proprietor: Hoerbiger Antriebstechnik GmbH, 86956 Schongau (DE)
(72) Inventor: De Maziere, Filip, 9070 Heusden-Desteltbergen (BE); Wallaert, Johan, 8200 Sint Michiels (BE)
(74) Representative: Kitzhofer, Thomas

(56) References cited:
- EP-A2- 1 420 186
- WO-A-2004/092618
- US-B1- 6 361 287

## Description

The present invention relates to a method of operating a duel clutch transmission (DCT) hydraulic power control system according to the preamble part of claim 1 as well as a dual clutch transmission (DCT) hydraulic power control system according to the preamble part of claim 3.

A known method and a known system suffers from the drawback of an excess power consumption due to poor control characteristics.

In WO 2004/092618 A1 an oil-supply device for the hydraulic circuit of a vehicle transmission, in particular an automatic transmission, and method for controlling or regulating the oil-supply device is disclosed. This device includes a first pump and a second pump as hydraulic pumps for transporting oil from a tank. The first pump can be driven by a first shaft, preferably the transmission input shaft or the motor output shaft. The hydraulic circuit comprises a low-pressure circuit and a highpressure circuit. The second pump can be driven by a second shaft and the device is equipped with a hydraulic control/regulation circuit, the latter comprising at least one first and one second input line and a first and a second output line, each of the two pumps being connected to a respective input line. The low-pressure circuit can be supplied by the first output line and the high pressure circuit by the second output line.

It is, therefore, an object of the present invention to provide a method of operating a dual clutch transmission (DCT) hydraulic power control system according to the preamble part of claim 1 as well as a corresponding system according to the preamble part of claim 3 being able to lower the power consumption simultaneously featuring optimized control characteristics.

The solution of this object is achieved by the features of claim 1 and 3, respectively.

A hydraulic power control system of a double clutch transmission (DCT) comprises pump means for providing the necessary oil flow under the necessary oil pressure conditions.

Moreover, as one further important feature the control system comprises a high pressure section for providing oil to the actuators of the DCT by activating the respective clutches and moving the synchronizers so that the high pressure section is the section for the overall activation of all moving parts of a double clutch transmission.

The low pressure section, in turn, serves the purpose of cooling and lubrication and should, preferably have, a low pressure level in order to avoid system losses. In other words, the low pressure section needs a lot of oil quantity but no high pressure conditions.

Moreover, the control system according to the present invention comprises a regulator means for directing excess oil from the high pressure section to the lubrication and cooling system and for keeping the pressure in the high pressure section constant.

The method of operating a DCT power control system comprising the before-listed features is characterised by the following method steps:
Closing, in a low speed mode, a directional valve that is disposed in a line (conduit) leading from the pump means to the lubrication and cooling section and operating two pump outlets of the pump means in parallel thereby forcing oil to flow through a check valve being disposed in a first branch line of the low pressure section that leads to the high pressure section;
Opening, in a medium speed mode, the before-mentioned directional valve of the low pressure section by activating an ON/OFF valve creating an ON/OFF pilot pressure for the directional valve, said ON/OFF valve being disposed in a connection line branching of the first branch line of the low pressure section between the before-mentioned check valve and the high pressure system; and
Keeping, in a high speed mode, the first pressure outlet of the pump means at a high pressure level and keeping the second pressure outlet of the pump means continuously at low pressure level by activating the before-mentioned ON/OFF valve of the directional valve.

The advantageous effect of this operating strategy is, especially in the medium speed mode, a lowering of the power consumption as usually in this operating mode there is enough flow and quantity of oil at high pressure created by only one pump stage provided that no activation is needed. If such an activation is needed the second pump outlet is switched to the high pressure section what results in the advantage that the medium speed range is made very wide.

In all the before-described modes it is also possible to operate a proportional pressure relieve valve that is controlled by a proportional pressure reducing valve to provide a constant pressure in both the low pressure and high pressure section having the side effect that oil is drained into the lubrication and cooling system if the pressure is too high.

The dependent claims contain advantageous embodiments of the present invention.

Further features, advantages and embodiments of the present invention will become apparent from the following description of the drawings.

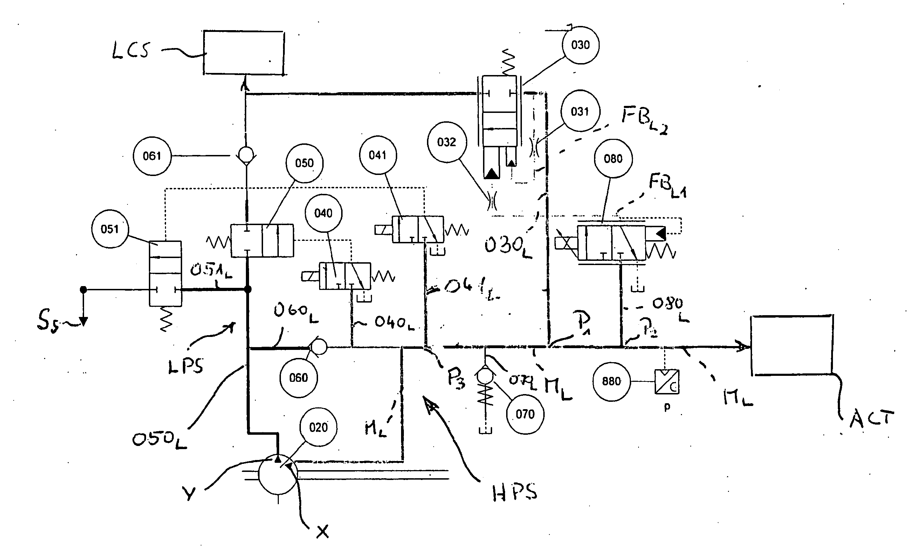

The only figure of the drawings shows a simplified hydraulic switching diagram of the hydraulic power control system according to the present invention.

This control system comprises pump means 020 being a fixed displacement double action pump having a first pressure outlet X and a second pressure outlet Y.

With such a kind of pump means it is possible to create an oil flow proportional to the engine speed in contrast to a variable displacement pump that diminishes the amount of oil flow per revolution of the engine.

In connection with the further features of the control system to be described in the following pump means 020 is able to lower the power consumption by lowering the oil flow at low and high pressure levels and by lowering the low pressure by creating a short circuit that will be described in detail later.

Moreover, it is possible to lower the high pressure what is e.g. possible when the torque to be transmitted is lower than its maximum. Nevertheless, if high pressure is needed, especially if an actuation is desired, the low pressure level can be put back to a high pressure level so that the entire system is very flexible and makes it possible to minimize the power consumption.

To achieve all these effects the control system according to the present invention includes, moreover, hydraulic control means comprising the following features:

A directional valve 050 that is disposed in a main line 050_{L} of a low pressure section LPS between pump means 020 and a lubrication and cooling system LCS said directional valve 050 being controlled by an ON/OFF valve 040. Said valve 040 is disposed between a check valve 060 and the directional valve 050. The check valve 060 is disposed in a branch line 060_{L} of a low pressure section LPS leading to the high pressure section HPS. The low pressure section LPS is depicted in the figure by the dark black lines whilst the high pressure HPS section is depicted by the dotted lines.

A regulator means 030 is provided for directing excess oil from the high pressure section HPS to the lubrication and cooling system LCS and for keeping the pressure in the high pressure section HPS constant. Said regulator means 030 preferably takes the form of a proportional pressure relief valve being disposed in a first branch line 030_{L} of a main line M_{L} of the high pressure section HPS. Said branch line 030_{L} branches off the main line M_{L} at a first branching point P₁ between the pump means 020 and the actuator side of the DCT being represented by block ACT.

Moreover, the preferred embodiment of the control system according to the present invention shown in the figure comprises a proportional pressure reducing valve 080 that is disposed in a second branch line 080_{L} of the main line M_{L} and that is fluidly connected with the proportional pressure relief valve 030 by a first feed back line FB_{L1.}

As shown in the drawings, there is, furthermore, a check (safety) valve 070 in a branch line 070_{L} branching of the main line M_{L} between said pump means 020 and the first branching point P₁ that is activated in case of an excessively high pressure in the high pressure section.

A pressure sensor 880 is provided in the main line M_{L} after a second branching point P₂ being disposed between point P₁ and the ACTs for giving a control feedback.

Branching point P₂ is a point where the second branch line 080_{L} branches off the main line M_{L} with the proportional pressure reducing valve 080 being disposed in said branch line 080_{L}. Said proportional pressure reducing valve 080 is adapted for reducing/creating a pilot pressure for the proportional pressure relief valve 030 that is pilot operated by the proportional pressure reducing valve 080 to keep the system pressure stable. A pilot pressure is a reference pressure so that the proportional pressure relief valve 030 knows how much oil is to be relieved to keep the system pressure constant. In case oil is to be relieved by the pressure relief valve 030 said oil is guided to the lubrication and cooling system of the DCT that is represented in the drawing by the block LCS. As can be learned from the drawings the ON/OFF valve 040 is disposed in a branch line 040_{L} and creates an ON/OFF pressure for the directional valve 050 that directs the oil from the low pressure section LPS to a check valve 061 leading to the lubrication and cooling system LCS.

In case valve 040 is blocked oil flows to the high pressure section APS through a check valve 060 being disposed in a branch line 060_{L} of the main line 050_{L} of the low pressure section LPS.

Moreover, there is a second ON/OFF valve 041 being disposed in a branch line 041_{L} branching off from the main line M_{L} of the high pressure section at a third branching point P₃ being disposed upstream of point P₁. Said valve 041 can be, as well as valve 040, a 3/2 ON/OFF valve for creating a pilot pressure for a 2/2 directional valve 051 for connecting the low pressure section side (outlet Y) of said pump means 020 with the suction side of pump means 020. Such a connection constitutes a short circuit that has the effect of a minimization of the pump losses when the pump 020 is not needed, e.g. when it is operating in the high speed operating condition where the pressure level is high enough.

Finally, the depicted embodiment of the control system comprises two throttles 031 and 032 in feed back lines FB_{L2} and FB_{L1}, respectively that are provided for the purpose of dampening and for achieving pressure stability in the entire system.

In addition to the written description of the control means according to the present invention reference is herewith made explicitly to the drawing for the purpose of additional disclosure.

### List of reference signs

- 020: double pump means
- X: pump outlet at the high pressure side
- Y: pump outlet at the low pressure side
- 030: proportional pressure relief valve
- 031,: 032 throttles
- 040: first ON/OFF valve (3/2 valve)
- 041_{L}: branch line
- 050: directional valve (2/2 directional valve)
- 051: 2/2 directional valve
- 051_{L}: branch line branching of main line 050_{L} of LPS
- 060: check valve
- 060_{L}: branch line branching of main line 050_{L}
- 061: check valve between LPS and LCS
- 070: check valve
- 080: proportional pressure reducing valve
- 080_{L}: branch line of main line M_{L}
- 880: pressure sensor
- ACT: actuators
- LCS: lubrication and cooling system
- P₁, P₂, P₃: first, second, third branching point
- Sₛ: suction side of pump means 020
- FB_{L1}, FB_{L2}: feed back lines

## Claims

1. Method of operating a dual clutch transmission (DCT) hydraulic power control system comprising:
- pump means (020);
- a high pressure section (HPS) for providing oil to the actuators (ACT) of the dual clutch transmission (DCT);
- a low pressure section (LPS) for providing oil to a lubrication and cooling system (LCS) of the dual clutch transmission (DCT); and
- a regulator means (030) for directing excess oil from the high pressure section (HPS) to the lubrication and cooling section (LCS) and for keeping the pressure in the high pressure section (HPS) constant, wherein it comprises the following method steps:
- closing, in a low speed mode, a directional valve (050) being disposed in a main line (050_{L}) of the low pressure section (LPS) and for leading oil to the lubrication and cooling section (LCS) of the clutches of the dual clutch transmission (DCT) and operating two pump outlets (X, Y) of the pump means (020) in parallel, thereby forcing oil to flow through a check valve (060) being disposed in a first branch line (060_{L}) of the low pressure section leading to the high pressure section (HPS);
- opening, in a medium speed mode, the directional valve (050) in the main line (050_{L}) of the low pressure section (LPS) by activating an ON/OFF valve (040) creating an ON/OFF pilot pressure for the directional valve (050) and being disposed in a connecting line (040_{L}) branching of the first branch line (060_{L});
- keeping, in a high speed mode, the first pressure outlet (X) of the pump means (020) at a high pressure level and keeping the second pressure outlet (Y) of the pump means (020) continuously at a low pressure level by activating the ON/OFF valve (040) of directional valve (050) and
- short circuiting, in the high speed mode, the low pressure section (LPS) via a 2/2 directional valve (051) disposed in a second branch line (051_{L}) of the low pressure section branching of the main line (050_{L}) by activating an ON/OFF valve (041) creating a pilot pressure for the 2/2 directional valve (051).

2. Method according to claim 1 being **characterised in** switching, in the medium speed mode, the second outlet (Y) of the pump means (020) to the high pressure section (HPS).

3. Dual clutch transmission (DCT) hydraulic power control system comprising:
- pump means (020);
- a high pressure section (HPS) for providing oil to actuators (ACT) of the DCT;
- a low pressure section (LPS) for providing oil to a lubrication and cooling system (LCS) of the dual clutch transmission (DCT); and
- regulator means (030) for directing excess oil from the high pressure section (HPS) to the lubrication and cooling section (LCS) and for keeping the pressure in the high pressure section (HPS) constant,
wherein the pump means (020) is a fixed displacement double action pump having a first pressure outlet (X) and a second pressure outlet (Y) and further comprising a hydraulic control means comprising:
- a directional valve (050) disposed in a main line (050_{L}) of the low pressure section (LPS) between the pump means (020) and the lubrication and cooling system (LCS), the directional valve (050) being controlled by an ON/OFF valve (040) disposed between a check valve (060) and the directional valve (050), the check valve (060) being disposed in a first branch line (060_{L}) of the low pressure section (LPS) leading to the high pressure section (HPS);
- a 2/2 directional valve (051) connecting the second pressure outlet (Y) associated to the low pressure section (LPS) with a suction side (Sₛ) of the pump means (020), the 2/2 directional valve (051) being disposed in a second branch line (051_{L}) of the low pressure section branching of the main line (050_{L}) and being activated by an ON/OFF valve (041) creating a pilot pressure for the 2/2 directional valve (051);
- a proportional pressure relief valve (030) constituting the regulator means and being disposed in a first branch line (030_{L}) of a main line (M_{L}) of the high pressure section (HPS), the branch line (030_{L}) branching off the main line (M_{L}) at a first branching point (P₁) between the pump means (020) and the actuators (ACT); and
- a proportional pressure reducing valve (080) being disposed in a second branch line (080_{L}) of the main line (M_{L}) of the high pressure section (HPS) and being fluidly connected with the proportional pressure relief valve (030) by a first feed back line (FB_{L1}).

## Patentansprüche

1. Verfahren zum Betrieb eines hydraulischen Leistungssteuersystems eines Doppelkupplungsgetriebes (DCT), mit:
- Pumpenmitteln (020),
- einem Hochdruckabschnitt (HPS) zur Versorgung der Stellantriebe (ACT) des Doppelkupplungsgetriebes (DCT) mit Öl,
- einem Niederdruckabschnitt (LPS) zur Versorgung eines Schmier- und Kühlsystems (LCS) des Doppelkupplungsgetriebes (DCT) mit Öl, und
- einer Regeleinrichtung (030), mit der überschüssiges Öl vom Hochdruckabschnitt (HPS) zum Schmier- und Kühlabschnitt (LCS) geleitet wird und der Druck im Hochdruckabschnitt (HPS) konstant gehalten wird,
wobei es die folgenden Verfahrensschritte umfasst:
- Schließen eines Wegeventils (050) in einem Niedrigdrehzahlmodus, das in einer Hauptleitung (050_{L}) des Niederdruckabschnitts (LPS) angeordnet ist, um Öl zum Schmier- und Kühlabschnitt (LCS) der Kupplungen des Doppelkupplungsgetriebes (DCT) zu leiten und zwei Pumpenauslässe (X, Y) der Pumpenmittel (020) parallel zu betätigen, wodurch Öl zwangsweise durch ein Rückschlagventil (060) fließt, das in einer ersten Abzweigleitung (060_{L}) des Niederdruckabschnitts angeordnet ist, die zum Hochdruckabschnitt (HPS) führt,
- Öffnen des Wegeventils (050) in der Hauptleitung (050_{L}) des Niederdruckabschnitts (LPS) in einem Modus mittlerer Drehzahl durch Betätigung eines Schaltventils (040), das einen Zweipunkt-Vorsteuerdruck für das Wegeventil (050) erzeugt und in einer Verbindungsleitung (040_{L}) angeordnet ist, die von der ersten Abzweigleitung (060_{L}) abzweigt,
- Halten des ersten Druckauslasses (X) der Pumpenmittel (020) auf einem Hochdruckpegel in einem Hochdrehzahlmodus und Halten des zweiten Druckauslasses (Y) der Pumpenmittel (020) kontinuierlich auf einem Niederdruckpegel durch Betätigung des Schaltventils (040) des Wegeventils (050) und
- Kurzschließen des Niederdruckabschnitts (LPS) im Hochdrehzahlmodus über ein 2/2-Wegeventil (051), das in einer zweiten Abzweigleitung (051_{L}) des Niederdruckabschnitts angeordnet ist, die von der Hauptleitung (050_{L}) abzweigt, durch Betätigung eines Schaltventils (041), das einen Vorsteuerdruck für das 2/2-Wegeventil (051) erzeugt.

2. Verfahren nach Anspruch 1, **gekennzeichnet durch** Umschalten des zweiten Auslasses (Y) der Pumpenmittel (020) auf den Hochdruckabschnitt (HPS) im Modus mittlerer Drehzahl.

3. Hydraulisches Leistungssteuersystem eines Doppelkupplungsgetriebes (DCT), mit:
- Pumpenmitteln (020),
- einem Hochdruckabschnitt (HPS) zur Versorgung von Stellantrieben (ACT) des DCTs mit Öl,
- einem Niederdruckabschnitt (LPS) zur Versorgung eines Schmier- und Kühlsystems (LCS) des Doppelkupplungsgetriebes (DCT) mit Öl, und
- Regeleinrichtungen (030), mit denen überschüssiges Öl vom Hochdruckabschnitt (HPS) zum Schmier- und Kühlabschnitt (LCS) geleitet wird und der Druck im Hochdruckabschnitt (HPS) konstant gehalten wird,
wobei das Pumpenmittel (020) eine doppeltwirkende Konstantpumpe mit einem ersten Druckauslass (X) und einem zweiten Druckauslass (Y) ist, und
ferner mit einer hydraulischen Steuereinrichtung mit:
- einem Wegeventil (050), das in einer Hauptleitung (050_{L}) des Niederdruckabschnitts (LPS) zwischen den Pumpenmitteln (020) und dem Schmier- und Kühlsystem (LCS) angeordnet ist, wobei das Wegeventil (050) von einem Schaltventil (040) gesteuert ist, das zwischen einem Rückschlagventil (060) und dem Wegeventil (050) angeordnet ist, wobei das Rückschlagventil (060) in einer ersten Abzweigleitung (060_{L}) des Niederdruckabschnitts (LPS) angeordnet ist, die zum Hochdruckabschnitt (HPS) führt,
- einem 2/2-Wegeventil (051), das den dem Niederdruckabschnitt (LPS) zugeordneten zweiten Druckauslass (Y) mit einer Saugseite (Sₛ) der Pumpenmittel (020) verbindet, wobei das 2/2-Wegeventil (051) in einer zweiten Abzweigleitung (051_{L}) des Niederdruckabschnitts angeordnet ist, die von der Hauptleitung (050_{L}) abzweigt, und von einem Schaltventil (041) betätigt wird, das einen Vorsteuerdruck für das 2/2-Wegeventil (051) erzeugt,
- einem Proportional-Druckentlastungsventil (030), das die Regeleinrichtung bildet und in einer ersten Abzweigleitung (030_{L}) einer Hauptleitung (M_{L}) des Hochdruckabschnitts (HPS) angeordnet ist, wobei die Abzweigleitung (030_{L}) von der Hauptleitung (M_{L}) an einem ersten Verzweigungspunkt (P₁) zwischen den Pumpenmitteln (020) und den Stellantrieben (ACT) abzweigt, und
- einem Proportional-Druckminderventil (080), das in einer zweiten Abzweigleitung (080_{L}) der Hauptleitung (M_{L}) des Hochdruckabschnitts (HPS) angeordnet ist und über eine erste Rückführungsleitung (FB_{L1}) mit dem Proportional-Druckentlastungsventil (030) in Strömungsverbindung steht.

## Revendications

1. Procédé de mise en oeuvre d'un système hydraulique de commande de puissance pour une boîte de vitesses à double embrayage (DCT), comportant :
- des moyens de pompe (020) ;
- un tronçon haute pression (HPS) pour fournir de l'huile aux actionneurs (ACT) de la boîte de vitesses à double embrayage (DCT) ;
- un tronçon basse pression (LPS) pour fournir de l'huile à un système de lubrification et de refroidissement (LCS) de la boîte de vitesses à double embrayage (DCT) ; et
- un moyen régulateur (030) pour guider de l'huile en excès du tronçon haute pression (HPS) vers le tronçon de lubrification et de refroidissement (LCS) et pour maintenir constante la pression dans le tronçon haute pression (HPS),
le procédé comprenant les étapes de procédé suivantes :
- fermer dans un mode basse vitesse une valve directionnelle (050) agencée dans une conduite principale (050_{L}) du tronçon basse pression (LPS) pour guider de l'huile vers le tronçon de lubrification et refroidissement (LCS) des embrayages de la boîte de vitesses à double embrayage (DCT), et mettre en oeuvre deux sorties de pompe (X, Y) des moyens de pompe (020) en parallèle, forçant ainsi de l'huile à couler à travers une soupape de retenue (060) agencée dans une première conduite de dérivation (060_{L}) du tronçon basse pression menant au tronçon haute pression (HPS) ;
- ouvrir dans un mode de vitesse moyenne la valve directionnelle (050) dans la conduite principale (050_{L}) du tronçon basse pression (LPS) en activant une valve marche/arrêt (040) qui produit une pression de pilotage de marche/arrêt pour la valve directionnelle (050) et qui est agencée dans une conduite de raccordement (040_{L}) bifurquant de la première conduite de dérivation (060_{L}) ;
- maintenir dans un mode grande vitesse la première sortie de pression (X) des moyens de pompe (020) à un niveau de haute pression et maintenir la deuxième sortie de pression (Y) des moyens de pompe (020) continuellement à un niveau de basse pression en activant la valve marche/arrêt (040) de la valve directionnelle (050), et
- court-circuiter dans le mode grande vitesse le tronçon basse pression (LPS) au moyen d'une valve directionnelle à 2/2 voies (051) agencée dans une deuxième conduite de dérivation (051_{L}) du tronçon basse pression bifurquant de la conduite principale (050_{L}) en activant une valve marche/arrêt (041) qui produit une pression de pilotage pour la valve directionnelle à 2/2 voies (051).

2. Procédé selon la revendication 1, **caractérisé par** la commutation dans le mode de vitesse moyenne de la deuxième sortie (Y) des moyens de pompe (020) sur le tronçon haute pression (HPS).

3. Système hydraulique de commande de puissance pour boîte de vitesses à double embrayage (DCT), comportant :
- des moyens de pompe (020) ;
- un tronçon haute pression (HPS) pour fournir de l'huile à des actionneurs (ACT) du DCT ;
- un tronçon basse pression (LPS) pour fournir de l'huile à un système de lubrification et de refroidissement (LCS) de la boîte de vitesses à double embrayage (DCT) ; et
- des moyens régulateur (030) pour guider de l'huile en excès du tronçon haute pression (HPS) vers le tronçon de lubrification et de refroidissement (LCS) et pour maintenir constante la pression dans le tronçon haute pression (HPS),
dans lequel le moyen de pompe (020) est une pompe à cylindrée constante à double effet présentant une première sortie de pression (X) et une deuxième sortie de pression (Y), et comportant en outre un moyen hydraulique de commande qui comporte :
- une valve directionnelle (050) agencée dans une conduite principale (050_{L}) du tronçon basse pression (LPS) entre les moyens de pompe (020) et le système de lubrification et de refroidissement (LCS), la valve directionnelle (050) étant commandée par une valve marche/arrêt (040) agencée entre une soupape de retenue (060) et la valve directionnelle (050), la soupape de retenue (060) étant agencée dans une première conduite de dérivation (060_{L}) du tronçon basse pression (LPS) menant au tronçon haute pression (HPS) ;
- une valve directionnelle à 2/2 voies (051) reliant la deuxième sortie de pression (Y) associée au tronçon basse pression (LPS) à un côté d'aspiration (Sₛ) des moyens de pompe (020), la valve directionnelle à 2/2 voies (051) étant agencée dans une deuxième conduite de dérivation (051_{L}) du tronçon basse pression bifurquant de la conduite principale (050_{L}) et étant activée par une valve marche/arrêt (041) produisant une pression de pilotage pour la valve directionnelle à 2/2 voies (051) ;
- une soupape de surpression proportionnelle (030) formant le moyen régulateur et étant agencée dans une première conduite de dérivation (030_{L}) d'une conduite principale (M_{L}) du tronçon haute pression (HPS), la conduite de dérivation (030_{L}) bifurquant de la conduite principale (M_{L}) à un premier point de dérivation (P₁) entre les moyens de pompe (020) et les actionneurs (ACT) ; et
- une soupape de réduction de pression proportionnelle (080) étant agencée dans une deuxième conduite de dérivation (080_{L}) de la conduite principale (M_{L}) du tronçon haute pression (HPS) et étant en liaison fluidique avec la soupape de surpression proportionnelle (030) par une première conduite de retour (FB_{L1}).
